# EUROPÄISCHE PATENTSCHRIFT

(11) **EP 0 591 653 B1**
(45) Veröffentlichungstag und Bekanntmachung des Hinweises auf die Patenterteilung: **17.04.1996**
(21) Anmeldenummer: 93112993.6
(22) Anmeldetag: 13.08.1993
(51) Int. Cl.: B62D 5/04, B62D 5/06

(54) **Elektrische Servolenkeinrichtung, insbesondere für Kraftfahrzeuge**
Electric power steering, especially for motor vehicles
Direction assistée électrique, en particulier pour véhicules à moteur

(30) Priorität: 07.10.1992 DE 4233670
(43) Veröffentlichungstag der Anmeldung: 13.04.1994
(73) Patentinhaber: Volkswagen Aktiengesellschaft, D-38436 Wolfsburg (DE)
(72) Erfinder: Wahnschaffe, Nikolaus, Dipl.-Ing., D-38444 Wolfsburg (DE); Siem, Jang Tik, Dipl.-Ing., D-38154 Königslutter (DE)

(56) Entgegenhaltungen:
- EP-A- 0 077 696
- EP-A- 0 091 590
- EP-A- 0 174 138
- DE-A- 2 603 306
- DE-A- 3 713 486
- DE-A- 4 032 876
- DE-U- 8 608 084
- FR-A- 2 222 857

## Beschreibung

Die Erfindung betrifft eine elektrische Servolenkeinrichtung, insbesondere für Kraftfahrzeuge, der im Oberbegriff des Patentanspruchs 1 genannten Art.

Aus der DE-A-26 03 306, DE-A-31 09 622 oder der DE-C-36 12 619 sind beispielsweise elektrische Servolenkeinrichtungen in Form elektromechanischer Servolenkeinrichtungen bekannt, bei denen das Drehmoment eines aus einer Bordbatterie gespeisten und nur in einer Drehrichtung umlaufenden Gleichstrommotors mechanisch mittels zweier von diesem kontinuierlich gegenläufig angetriebener rotierender Kupplungsglieder selbsttätig und vor allem - z. B. über Torsionsglieder o. ä. - kraftgesteuert als Servomoment auf die manuell betätigte Lenkwelle der Lenkeinrichtung übertragen wird.

Bei diesen vorbekannten elektrischen Servolenkeinrichtungen wird der aus der Bordbatterie gespeiste Gleichstrommotor bei der Inbetriebnahme des Kraftfahrzeugs selbsttätig eingeschaltet, d. h. elektrisch mit der Bordbatterie verbunden. Er läuft somit von Anfang an ständig mit einer durch die Höhe der Bordbatteriespannung bestimmten vergleichsweise hohen Drehzahl um, die - solange ihm kein durch Lenkradeinschläge bedingtes Servomoment abgefordert wird - etwa seiner Leerlaufdrehzahl entspricht.

Aus der DE-U-86 08 084 ist dagegen eine elektrische Servolenkeinrichtung in Form einer elektro-hydraulischen Servolenkeinrichtung bekannt, bei der das Drehmoment eines aus einer Bordbatterie gespeisten und nur in einer Drehrichtung umlaufenden Gleichstrommotors hydraulisch mittels einer von ihm angetriebenen Hydraulikpumpe mit von dieser gespeisten hydraulischen Stellgliedern als Servomoment oder als Servokraft auf die manuell betätigte Lenkwelle der Lenkeinrichtung übertragen wird, wobei die Aussteuerung des Gleichstrommotors in Abhängigkeit von der mittels eines Sensors erfaßten Drehgeschwindigkeit der Lenkwelle erfolgt.

Die Aussteuerung des Gleichstrommotors erfolgt dabei derart, daß der von der Hydraulikpumpe erzeugte Volumenstrom bzw. Druckmittelstrom gerade dem jeweils im gleichen Augenblick bestehenden Lenkhilfskraftbedarf entspricht.

Vor diesem Hintergrund liegt der Erfindung die Aufgabe zugrunde, eine elektrische Servolenkeinrichtung der im Oberbegriff des Patentanspruchs 1 genannten Art anzugeben, die sich nicht nur durch hohe Effektivität, besondere Geräuscharmut und besonders geringen Energiebedarf auszeichnet, sondern auch durch ein reaktionsschnelles Ansprechverhalten.

Diese Aufgabe wird erfindungsgemäß durch die kennzeichnenden Merkmale des Patentanspruchs 1 gelöst.

Vorteilhafte Ausgestaltungen und Weiterbildungen der Erfindung sind in den Unteransprüchen angegeben.

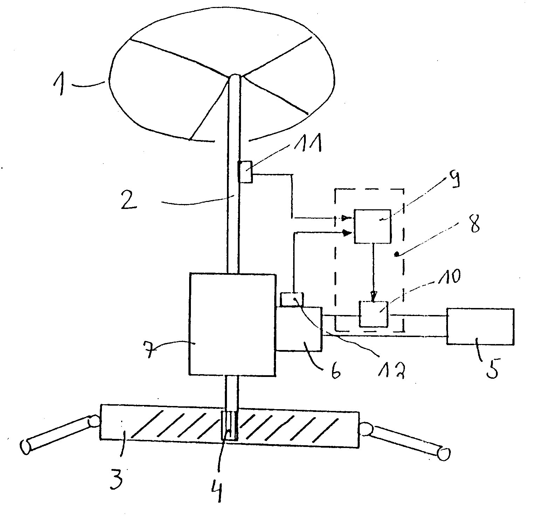

Anhand eines in der Zeichnung dargestellten Ausführungsbeispiels wird die Erfindung näher erläutert.

Die einzige Figur der Zeichnung zeigt in prinzipienhafter Darstellung eine Kfz-Lenkeinrichtung mit einer elektromechanischen Servounterstützung.

Diese im Ausführungsbeispiel als Zahnstangenlenkung ausgebildete Lenkeinrichtung enthält u. a. eine über ein Lenkrad 1 manuell betätigbare Lenkwelle 2 mit einem mit der Zahnstange 3 des Lenkgetriebes kämmenden Lenkritzel 4 sowie einen aus einer Bordbatterie 5 gespeisten Gleichstrommotor 6, dessen Drehmoment selbsttätig und kraftgesteuert mittels einer im Zuge der Lenkwelle 2 angeordneten speziellen Kupplungseinrichtung 7 mit zwei gegenläufig rotierenden Kupplungsgliedern mechanisch als Servomoment auf die manuell betätigte Lenkwelle 2 übertragen wird.

Der vorzugsweise permanenterregte Gleichstrommotor 6 läuft nur in einer Drehrichtung um und treibt dabei die gegenläufig rotierenden Kupplungsglieder der im übrigen z. B. entsprechend der DE-36 12 619-C2 ausgebildeten Kupplungseinrichtung 7 kontinuierlich an.

Bei vorbekannten elektrischen Servolenkeinrichtungen mit elektromechanischer Übertragung des Servomoments läuft der mit der Inbetriebnahme des Kraftfahrzeugs an die Bordbatteriespannung gelegte Gleichstrommotor ständig mit einer durch die Höhe der Bordbatteriespannung bestimmten vergleichsweise hohen Drehzahl um, die, solange ihm kein Servomoment abverlangt wird, etwas unterhalb seiner durch die Höhe der Batteriespannung bestimmten Leerlaufdrehzahl liegt, weil auch für den kontinuierlichen Antrieb der im Leerlauf umlaufenden Kupplungsglieder ein gewisses Antriebsmoment aufgebracht werden muß.

Der Gleichstrommotor besitzt somit ein aktuelles Energiepotential bzw. ein aktuelles Vermögen zur Energieabgabe, welches während des größten Teils seiner Betriebszeit weit höher ist als es zur Aufbringung der betrieblich gerade abverlangten Servoleistung benötigt wird.

Bei der erfindungsgemäßen elektrischen Servolenkeinrichtung ist nun eine Regeleinrichtung 8 vorgesehen, die dafür sorgt, daß der Gleichstrommotor 6 nicht ständig unnütz unter entsprechenden Verlusten mit viel zu hoher Drehzahl umläuft. Statt dessen wird er derart geregelt, daß sein aktuelles Vermögen zur Energieabgabe stets nur um ein begrenztes Maß über dem Wert liegt, wie es zum Aufbringen der betrieblich jeweils gerade abverlangten Servoleistung erforderlich ist.

Vorzugsweise ist die Regeleinrichtung 8 als Drehlzahlregeleinrichtung ausgebildet, die die Drehzahl des Gleichstrommotors 6 derart regelt, daß die Differenzdrehzahl zwischen der Motordrehzahl und der aus der Lenkradwinkelgeschwindigkeit errechneten theoretischen Lenkraddrehzahl zumindest annähernd konstant ist und etwa in der Größenordnung von 10 bis 30% der Leerlaufdrehzahl des Gleichstrommotors 6 liegt, die sich bei voll an ihm anliegender Spannung der Bordbatterie 5 ergäbe.

Zu diesem Zweck sind an der Lenkwelle 2 einerseits und am Gleichstrommotor 6 andererseits Sensoren 11, 12 zur Erfassung der Winkelgeschwindigkeiten bzw. Drehzahlen der Lenkwelle 2 bzw. des Lenkrades 1 einerseits und des Gleichstrommotors 6 andererseits angeordnet. Die Ausgangssignale dieser Sensoren werden der Regeleinrichtung 8, und zwar einem elektronische Logik- und Rechenbausteine sowie z. B. einen Puls-Weiten-Modulator enthaltenden Regler 9 zugeführt, der nach Auswertung dieser Signale die an den Gleichstrommotor 6 angelegte Spannung mittels eines zwischen Gleichstrommotor 6 und Bordbatterie 5 zwischengeschalteten elektronischen Gleichstromstellers 10, bei dem es sich beispielsweise um einen geeigneten Leistungstransistor nach Art eines MOSFET handeln kann, derart steuert, daß sich die gewünschte Drehzahldifferenz einstellt, wobei die maximal mögliche Leerlaufdrehzahl des Gleichstrommotors 6 durch die Höhe der Batteriespannung bestimmt bzw. begrenzt ist.

Durch die beschriebene Betriebsweise der elektrischen Servolenkeinrichtung wird eine dem allgemeinen Komfort des Fahrzeuges zugute kommende deutliche Geräuschreduzierung sowie eine spürbare Verringerung der mittleren Leistungsaufnahme des Gleichstrommotors 6 erzielt, was nicht nur den Einsatz kapazitätskleinerer und damit deutlich leichterer Bordbatterien, sondern auch eine spürbar kleinere Dimensionierung des Gleichstrommotors selbst ermöglicht, weil dieser während seiner Ruhephasen, d. h. wenn ihn kein Servomoment abverlangt wird, aufgrund seiner nunmehr deutlich niedrigeren Leerlaufverluste in dieser Betriebsphase deutlich weniger warm wird und deshalb durch die in den übrigen Betriebsphasen kurzzeitig auftretenden höheren Ströme nicht so schnell überhitzt wird.

Von Vorteil ist es, wenn die Drehzahlregeleinrichtung 8 derart ausgebildet ist, daß sie sobald und solange die Motordrehzahl des Gleichstrommotors 6 während des Fahrbetriebes unter einen vorgegebenen Minimalwert abfällt, selbsttätig abgeschaltet bzw. derart umgeschaltet wird, daß der Gleichstrommotor während dieser Zeit mit einer weit unterhalb der Spannung der Bordbatterie 5 liegenden konstanten Spannung gespeist wird, die vorzugsweise etwa in der Größenordnung von 20% der Bordbatteriespannung liegt. Durch diese regelungstechnische Maßnahme wird in einfacher Weise einerseits verhindert, daß der Gleichstrommotor und/oder der elektronische Gleichstromsteller überlastet werden kann, wenn die Lenkeinrichtung z. B. bereits gegen den regelmäßig vorgesehenen mechanischen Lenkanschlag gefahren ist und weiter dagegen gearbeitet wird. Ohne diese regelungstechnische Zusatzmaßnahme würde der Regler 9 den Gleichstromsteller 10 nämlich aufgrund der entsprechend abgesunkenen Motordrehzahl "voll durchschalten", d. h. mit einem Tastverhältnis von 100% betreiben und damit auf Dauer die volle Batteriespannung an den Gleichstrommotor anlegen. Das Umschalten auf die reduzierte Spannung von nur etwa 20% der Batteriespannung bewirkt dagegen eine entsprechend reduzierte Stromhöhe, die auch im Dauerbetrieb weder für den Gleichstrommotor 6 noch für den Gleichstromsteller 10 schädlich wäre.

Andererseits ist diese reduzierte Spannung ausreichend hoch, um den Gleichstrommotor 6 beim Fortfall eines solchen "Blockierhindernisses" selbsttätig wieder über die vorerwähnte Minimaldrehzahl hochzufahren, so daß der Regler 9 der Regeleinrichtung wieder automatisch die vorgegebene Differenzdrehzahl einregelt.

Mit der erfindungsgemäßen elektrischen Servolenkeinrichtung werden die außergewöhnliche Geräuscharmut und die ungewöhnlich niedrigen Leerlaufverluste der Servolenkeinrichtung bereits dann erreicht, wenn der Gleichstrommotor 6 wie bei solchen elektrischen Servolenkeinrichtungen üblich mit der Inbetriebnahme des Kraftfahrzeuges eingeschaltet wird.

Eine weitere Reduzierung des Energiebedarfs für die Servolenkeinrichtung könnte dadurch erreicht werden, daß der Gleichstrommotor 6 während des Fahrbetriebs immer erst dann selbsttätig eingeschaltet wird, wenn infolge eines Lenkradeinschlags Bedarf nach einem entsprechenden Servomoment besteht. Dieses selbsttätige Ein- und wieder Ausschalten des Gleichstrommotors kann in einfacher Weise mittels eines lenkmomentabhängigen Schalters erreicht werden; allerdings ist für diese Art der Betriebsweise ein zusätzlicher regelungstechnischer Aufwand erforderlich.

Die Erfindung wurde anhand eines Ausführungsbeispiels erläutert, bei dem das vom Gleichstrommotor aufgebrachte Servomoment elektromechanisch auf die Lenkwelle der Lenkeinrichtung übertragen wird. Die Erfindung ist jedoch nicht auf derartige Servolenkeinrichtungen beschränkt. Sie ist in gleicher Weise mit denselben Vorteilen auch bei solchen elektrischen Servolenkeinrichtungen anwendbar, bei denen das Drehmoment eines Gleichstrommotors nicht mechanisch, sondern hydraulisch kraftgesteuert als Servomoment bzw. als entsprechende Servokraft zur Wirkung gebracht wird, z. B. bei solchen elektrischen Servolenkeinrichtungen, bei denen ein ständig umlaufender Gleichstrommotor eine das Lenkgestänge beaufschlagende hydraulische Stellglieder speisende Hydraulikpumpe antreibt, deren Volumenstrom der Drehzahl des Gleichstrommotors proportional ist.

## Patentansprüche

1. Elektrische Servolenkeinrichtung, insbesondere für Kraftfahrzeuge, mit einer manuell betätigbaren Lenkwelle (2) sowie mit einem die manuelle Betätigung unter anderem in Abhängigkeit von der mittels eines Sensors (11) erfaßten Drehgeschwindigkeit der Lenkwelle (2) unterstützenden, aus einer Bordbatterie (5) gespeisten und nur in einer Drehrichtung umlaufenden Gleichstrommotor (6), vorzugsweise einem permanent erregten Gleichstrommotor, dessen Drehmoment entweder hydraulisch mittels einer von ihm angetriebenen Hydraulikpumpe mit von dieser gespeisten hydraulischen Stellgliedern oder aber mechanisch mittels zweier von ihm kontinuierlich angetriebener, gegenläufig rotierender Kupplungsglieder selbsttätig und kraftgesteuert als Servomoment oder als Servokraft auf die manuell betätigte Lenkwelle (2) oder auf ein damit in Verbindung stehendes anderes mechanisches Bauelement der Lenkeinrichtung übertragbar ist,
gekennzeichnet durch eine Regeleinrichtung (8), die das aktuelle Vermögen des Gleichstrommotors (6) zur Energieabgabe auf einen Wert, der stets etwas größer ist als der Wert, welcher der betrieblich gerade abverlangten Servoleistung entspricht, in der Weise durch Änderung der Drehzahl des Gleichstrommotors (6) regelt, daß die Differenzdrehzahl zwischen der Motordrehzahl und einer aus einer sensorisch erfaßten Lenkwinkelgeschwindigkeit errechneten Lenkraddrehzahl zumindest annähernd konstant ist und etwa in der Größenordnung von 10 bis 30 % der Leerlaufdrehzahl des Gleichstrommotors (6) bei voll an ihm anliegender Bordbatteriespannung liegt.

2. Elektrische Servolenkeinrichtung nach Anspruch 1,
**dadurch gekennzeichnet,**
daß die Drehzahlregeleinrichtung (8) sobald und solange die Motordrehzahl während des Betriebs unter einen vorgegebenen Minimalwert abfällt, selbsttätig abschaltbar bzw. derart umschaltbar ist, daß der Gleichstrommotor (6) während dieser Zeit mit einer weit unterhalb der Bordbatteriespannung liegenden konstanten Spannung gespeist ist.

3. Elektrische Servolenkeinrichtung nach Anspruch 2,
**dadurch gekennzeichnet,**
daß die Spannung in der Größenordnung von etwa 20% der Bordbatteriespannung liegt.

4. Elektrische Servolenkeinrichtung nach einem der Ansprüche 1 bis 3,
**dadurch gekennzeichnet,**
daß mit dem Starten des Kraftfahrzeugs gleichzeitig auch die Inbetriebnahme des Gleichstrommotors (6) verbunden ist.

5. Elektrische Servolenkeinrichtung nach einem der Ansprüche 1 bis 3,
**dadurch gekennzeichnet,**
daß die Inbetriebnahme des Gleichstrommotors (6) erst durch einen lenkmomentenabhängig ansprechenden Schalter bewirkt wird.

## Claims

1. Electric power steering device, in particular for motor vehicles, having a manually actuated steering shaft (2) and a direct-current motor (6) which assists the manual actuation among other things in dependence upon the rotational speed of the steering shaft (2) detected by a sensor (11) and which direct-current motor can rotate in only one direction and is supplied with current from a motor vehicle battery (5) and which direct-current motor is preferably a permanently excited direct-current motor whose torque can be transmitted automatically and power controlled as a servo moment or servo force to the manually actuated steering shaft (2) or to a different mechanical component of the steering device connected thereto, either hydraulically by means of a hydraulic pump, which is driven by the direct-current motor and comprises hydraulic adjusting members controlled by the said pump, or however mechanically by means of two coupling members which are continuously driven in counterrotation by the said direct-current motor,
characterised by a control device (8), which regulates the actual capacity of the direct-current motor (6) to output energy to a value, which is constantly greater than the value which corresponds to the operational servo output required at the time, in such a manner that by changing the rotational speed of the direct-current motor (6) the difference between the motor rotational speed and a steering wheel rotational speed calculated from a steering angle velocity detected by a sensor is at least almost constant and lies approximately in the magnitude of 10 to 30% of the idling rotational speed of the direct-current motor (6) in the case of a full voltage being supplied thereto from the vehicle battery.

2. Electric power steering device according to claim 1, characterised in that, as soon as and for as long as the motor rotational speed during the operation drops below a predetermined minimum value, the rotational speed control device (8) is switched off automatically or rather switched over in such a manner that the direct-current motor (6) is supplied during this time with a constant voltage which is considerably below the vehicle battery voltage.

3. Electric power steering device according to claim 2, characterised in that the voltage lies in the magnitude of approximately 20% of the vehicle battery voltage.

4. Electric power steering device according to any one of claims 1 to 3, characterised in that the setting into operation of the direct-current motor (6) is also associated simultaneously with the starting of the motor vehicle.

5. Electric power steering device according to any one of claims 1 to 3, characterised in that the direct-current motor (6) is set into operation only by virtue of a switch which responds in dependence upon the steering moment.

## Revendications

1. Direction électrique assistée, en particulier pour véhicules à moteur, avec un arbre de direction (2), qui peut être actionné manuellement, ainsi qu'avec un moteur à courant continu (6) qui assiste l'actionnement manuel entre autres en fonction de la vitesse de rotation de l'arbre de direction (2) vitesse détectée au moyen d'un capteur (11), moteur à courant continu alimenté à partir d'une batterie de bord (5), et qui ne tourne que dans un sens de rotation, de préférence un moteur à courant continu excité en permanence, dont le couple de rotation peut être transmis de façon automatique et servocommandée en tant que servocouple ou servocommande à l'arbre de direction (2), actionné manuellement, ou à un autre élément mécanique de la direction se trouvant en liaison avec cet arbre, soit de façon hydraulique au moyen d'une pompe hydraulique entraînée par lui avec des vérins hydrauliques alimentés par cette pompe, soit aussi de façon mécanique au moyen de deux organes d'embrayage, entraînés par le moteur de façon continue et tournant en sens opposés,
direction électrique assistée, caractérisée par un système de régulation (8), qui règle la capacité réelle du moteur à courant continu (6) à fournir de l'énergie sur une valeur, qui est en permanence un peu plus grande que la valeur qui correspond à la puissance d'assistance précisément demandée en fonctionnement, en faisant varier la vitesse de rotation du moteur à courant continu (6) d'une manière telle que la différence entre la vitesse de rotation du moteur et une vitesse de rotation du volant de direction, calculée à partir de la vitesse angulaire de braquage, détectée au moyen de capteurs, soit constante, au moins approximativement, et ait à peu près un ordre de grandeur de 10% à 30% de la vitesse de rotation à vide du moteur à courant continu (6) quand lui est appliquée complètement la tension de la batterie de bord.

2. Direction électrique assistée selon la revendication 1, caractérisée en ce que le système de régulation de la vitesse de rotation (8) peut être automatiquement débranché ou commandé dès que et aussi longtemps que la vitesse de rotation du moteur tombe pendant le fonctionnement en-dessous d'une valeur minimale prédéfinie, d'une manière telle que le moteur à courant continu (6) soit alimenté pendant ce temps par une tension constante se trouvant loin en-dessous de la tension de la batterie de bord.

3. Direction électrique assistée selon la revendication 2, caractérisée en ce que la tension est dans un ordre de grandeur d'environ 20% de la tension de la batterie de bord.

4. Direction électrique assistée selon l'une des revendications 1 à 3 caractérisée en ce que la mise en route du moteur à courant continu (6) est aussi reliée au démarrage du véhicule à moteur.

5. Direction électrique assistée selon l'une des revendications 1 à 3 caractérisée en ce que la mise en route du moteur à courant continu (6) est seulement déclenchée par un interrupteur qui est actionné en fonction du couple de braquage.
